# EUROPEAN PATENT SPECIFICATION

(11) **EP 0 964 507 B1**
(45) Date of publication and mention of the grant of the patent: **08.09.2010**
(21) Application number: 99110845.7
(22) Date of filing: 07.06.1999
(51) Int. Cl.: H02P 6/14, H02P 6/08

(54) **A control circuit for an electric motor without commutator**
Regelkreis für einen kommutatorlosen elektrischen Motor
Circuit de régulation pour un moteur électrique sans collecteur

(30) Priority: 08.06.1998 IT TO980502
(43) Date of publication of application: 15.12.1999
(73) Proprietor: GATE S.r.l., 10122 Torino (IT)
(72) Inventor: Avidano, Maurizio, 10042 NICHELINO (Torino) (IT); Pangella, Pierfranco, 14021 BUTTIGLIERA D`ASTI (Asti) (IT)
(74) Representative: Quinterno, Giuseppe

(56) References cited:
- EP-A- 0 538 204
- DE-A- 19 745 312
- US-A- 4 535 274
- PATENT ABSTRACTS OF JAPAN vol. 018, no. 263 (E-1550), 19 May 1994 (1994-05-19) & JP 06 038579 A (NIPPON DENSAN CORP), 10 February 1994 (1994-02-10)

## Description

The present invention relates to a control circuit for an electric motor.

More particularly it relates to a control circuit for a half wave DC polyphase electric motor without commutator, of the kind defined in the preamble of claim 1.

A control circuit of this kind for a half-wave brushless motor with a surge limiter is disclosed in EP-A-0 538 204.

It is known that a brushless electric motor (the term "brushless motor" is used more widely than "motor without commutator") of the type described above is controlled by selectively supplying each phase of the motor with a direct current delivered by a supply source, for example a battery, for a time interval in which the corresponding electronic phase switch is turned on. This time interval is determined as a function of the angular position of the rotor.

At the instant each switch is turned off, because of its inductive component, each phase releases accumulated electromagnetic energy and generates an over-voltage on the corresponding winding. It is known to provide a path for recirculation of the transient current discharged from the winding, and a circuit network for the limitation of the over-voltage on the phase.

DE-A-19745312 discloses a control circuit for a DC brushless motor with a protective transistor against inductively induced voltage peaks.

The object of the invention is to provide an improved control circuit for a brushless motor.

This object is achieved by the control circuit defined in claim 1.

The control circuit thus formed and operated, and as subsequently described, lends itself advantageously to the driving of brushless electric motors for applications in the automotive field with DC supply voltages of low value (12V) derived from the battery.

In a manner of operation known per se in the art, phase switches are driven by a pulse width modulated (PWM) signal in the time period during which the corresponding phase is powered. Each recirculation switch is turned on during the course of the whole period in which the PWM modulation of the respective phase switch is controlled, and preferably for a further time interval sufficient to guarantee complete decay of the current in the phase.

The circuit branch comprising the diode and the recirculation switch, in the intervals in which it is turned on, further behave as a voltage limiting network forcing the corresponding terminal of the phase to a voltage slightly greater than the supply voltage by a value given by the voltage established across the terminals of the diode and the switch.

The arrangement according to the invention therefore has the advantage of allowing a high efficiency in recovering energy accumulated in the phases and of controlling the phase over-voltage with a relatively simple and low cost circuit.

The use in the recirculation network of semiconductor devices which have a low resistance to conduction in the operating condition, further limits resistance losses which would have occurred during the flow of the transient current and allows a better temperature behaviour of the entire control circuit to be obtained.

Further characteristics and advantages of the invention will be explained in more detail in the following detailed description given by way of non-limitative example with reference to the attached drawings, in which:
Figures 1a and 1b are two circuit diagrams of two particular embodiments of a control circuit according to the invention;
Figure 2 shows a series of graphs indicative of the variation of the quantities representative of the operation of the circuit.

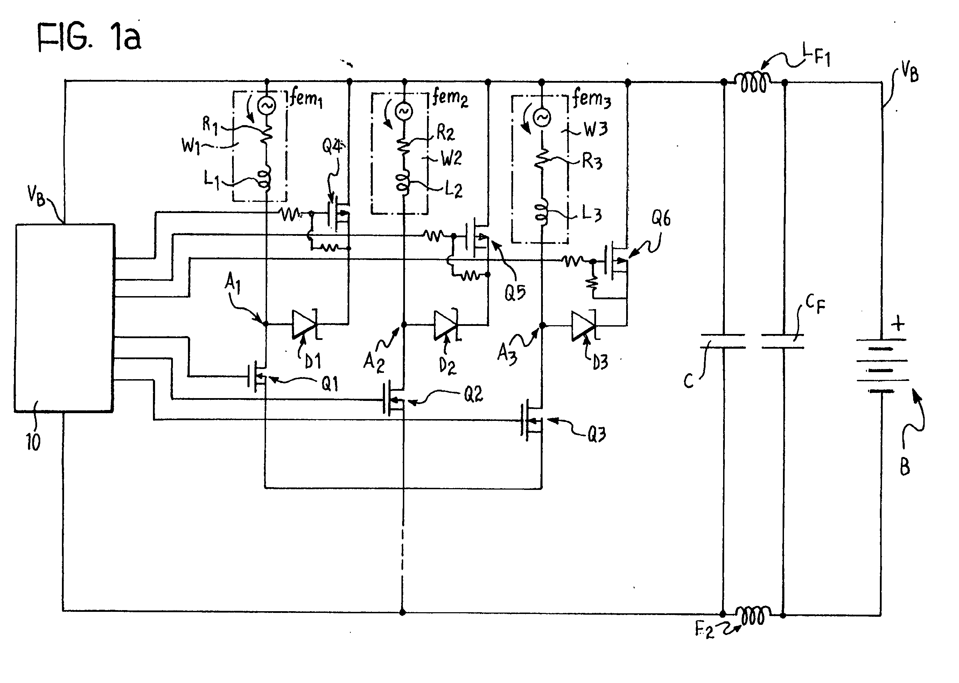

In Figure 1a there is shown a first non-limitative embodiment of the circuit according to the invention. The stator phases of a brushless half-wave three-phase electric motor are constituted by the windings W1, W2, W3 disposed in a star connection, the common terminal of which is connected directly to the positive terminal of a DC supply source B.

Each winding Wi has been shown with an equivalent circuit of series type, including a voltage generator femᵢ which represents the self-induced electromotive force, a resistor Rᵢ which represents the resistive component of the winding, and an inductor Lᵢ which represents the inductive component of the winding.

Through the phase terminals, indicated as nodes A₁, A₂, A₃, the three windings W1, W2, W3 are connected in series to the drain electrodes of three respective phase transistors Q1, Q2, Q3 formed as n-channel MOSFET transistors. The source electrodes of these transistors are connected together and coupled to ground.

Respective recirculation branches are disposed parallel to each phase winding, and each comprises a recirculation diode, respectively D1, D2, D3, the anode of which is connected to the terminal of the corresponding phase, and a recirculation transistor Q4, Q5, Q6 respectively, in series with the diode.

The recirculation transistors are formed as p-channel MOSFET transistors, the source electrodes of which are connected in series to the cathode of the associated diode and the drain electrodes of which are coupled to the supply source B.

The gate electrodes of the phase transistors and the recirculation transistors are coupled to the outputs of a driving circuit 10, powered by the same source B and adapted to provide enabling signals to turn these transistors selectively and cyclically on according to predetermined manners.

A capacitor C is provided substantially in parallel with the supply source B as a filter for the harmonic voltage components which arise across the terminals of the supply source in the particular operation of the circuit.

An LC filter formed with inductors L_{F1} and L_{F2} and the capacitor C_{F} is further provided across the terminals of the supply source to provide a further filtering.

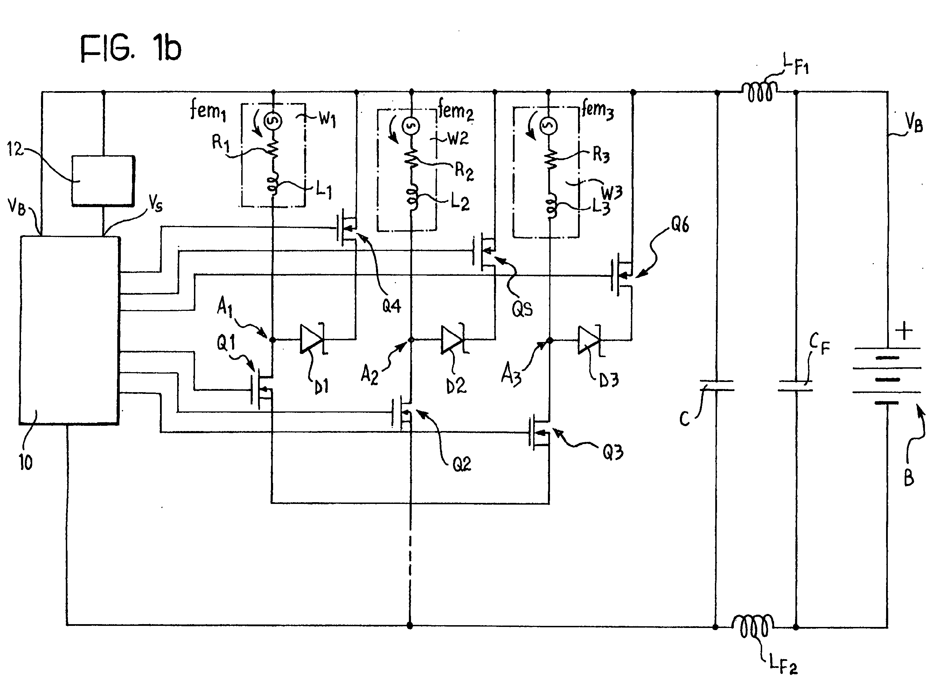

A second embodiment of the control circuit is illustrated in Figure 1b. It is substantially similar to that shown in Figure 1a, except for the fact that the recirculation transistors Q4, Q5, Q6 are now formed as n-channel MOSFET transistors connected in series to the cathode of the associated diode by the drain electrodes, and coupled to the supply source B via the source electrodes.

A voltage booster circuit 12 is arranged between the positive terminal of the supply and the driving circuit 10, which already receives supply from the source B, to provide it with a further voltage V_{S}, greater than the battery voltage V_{B}.

This latter arrangement is preferable due to the lower cost of the n-channel MOSFETs with respect to p-channel MOSFETs. The recirculation transistors Q4, Q5 and Q6 if made as n-channel MOSFETs and arranged as described, however, require gate control voltages greater than the maximum available voltage V_{B} provided by a typical motor vehicle battery and present at the source electrode. The second supply voltage V_{S} derived by the voltage booster circuit 12 and provided to the driving circuit 10 meets the above-mentioned requirement.

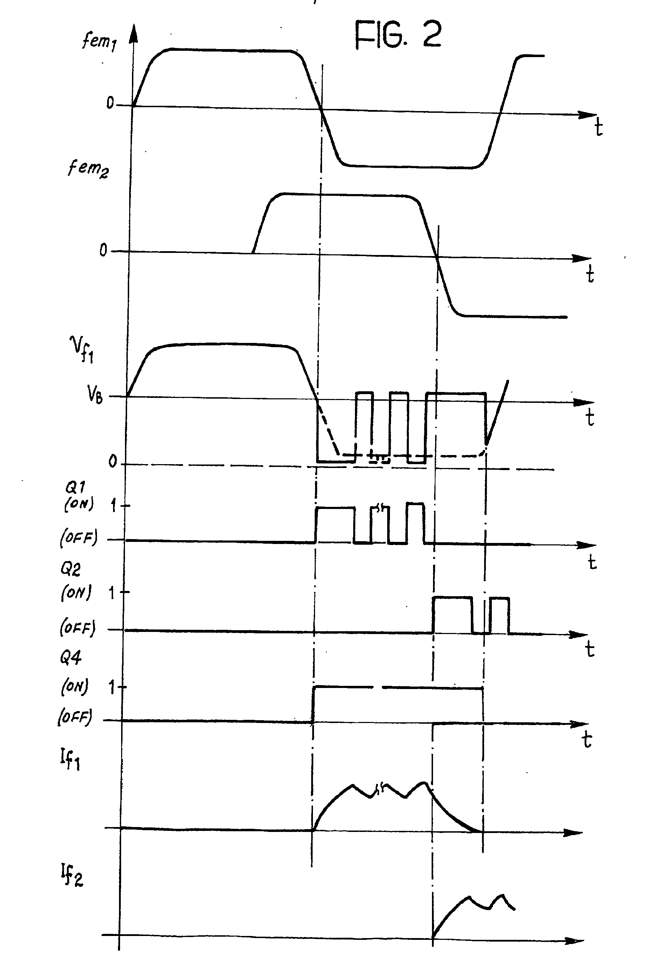

In order better to understand the operation of the control circuit, reference will be made hereinafter to the variation of the electrical quantities in a single phase of the motor, described in the graphs of Figure 2.

The first graph shows the qualitative variation of the electromotive force fem₁ which develops across the phase winding W1 as a function of the angular position of the rotor of the motor. The second graph shows partially the qualitative variation of the analogous electromotive force fem₂ which develops across the winding W2 with a 120° electrical phase displacement.

In the third graph there is shown in broken outline the variation with time of the phase voltage V_{f1} present at the node A₁ with respect to ground for a theoretical "no load" operation, that is in which the phase transistor Q1 is switched off for the entire cycle of the corresponding fem₁. The solid outline on the other hand indicates the variation of the same voltage as a function of the driving of the transistors Q1 and Q4 plotted in the subsequent graphs.

In graphs Q1 and Q4, accompanied for reference by that relating to the driving of the transistor Q2, there is shown the driving signal provided by the circuit 10 to the said transistors. This signal has alternately a first level, which can be interpreted as a conduction enabling command (transistor in the ON state) and a second level which can be interpreted as a disabling command (transistor in the OFF state).

Finally, the last two graphs illustrate the variation with time of the phase current I_{f1} which flows in the winding W1 and the phase current I_{f2} which flows in the winding W2.

With reference to the phase W1, the transistor Q1 is turned on in correspondence with the negative half-wave of the electromotive force fem₁ by the pulse width modulated signal indicated in the graph again as Q1.

This operating mode is known in the art for controlling the average value of the phase current I_{f1} in the winding W1 with precision, and is therefore not described in detail.

In the example the transistor Q1 is turned on (ON state) when there is detected, in a manner known per se, the passage of the rotor (not illustrated) of the motor through a given angular position.

It is maintained turned on for a predetermined initial time interval so as to allow the increase in phase current I_{f1} in the winding W1 up to a predetermined value as a function of the preselected speed of rotation of the electric motor, and then driven with a PWM signal of preselected duty cycle.

The conduction of the transistor Q1 can be interrupted, for example, in advance of the transistor Q2 of the phase W2 switching on, in order to permit the complete decay of the current in the winding W1 before powering the subsequent winding. This arrangement is not the only one possible and the system may instead advantageously operate for a short time interval with two phases powered simultaneously in such a way as to reduce the torque losses which experimentally occur in correspondence with the phase switchings because of the significant reduction in the electromagnetic induction field generated by successive phases.

The recirculation transistor Q4 is turned on by the driving circuit at least when the corresponding transistor Q1 is turned off, for a time within the 180 electrical degrees in which the voltage fem₁ maintains the correct polarity for the generation of torque, and is turned off outside the said interval of 180 electrical degrees to prevent braking of the motor.

It is simple and useful in practice to maintain the transistor Q4 permanently on over the whole of the said period, both whilst the transistor Q1 is switched on and when it is switched off.

When the transistor Q1 conducts, the phase voltage V_{f1} present at the node A₁ goes to a value close to the ground voltage, determined by the voltage drop between the drain of Q1 and ground. The recirculation diode D1 cannot be forward biased so as also to become conductive, and the phase current I_{f1} flows from the winding W1 towards ground.

When Q1 is switched off a positive over-voltage is established at node A₁ because of the electromagnetic energy accumulated in winding W1. The diode D1 is forward biased and the recirculation circuit branch becomes conductive and drains the transient discharge current from the phase W1. The voltage at node A₁ is limited to a value equal to the sum of the source voltage V_{B}, the forward biasing voltage of the diode D1 and the voltage drop on the recirculation transistor Q4.

In the example, Schottky diodes are advantageously used as the recirculation diodes since in switching they have a faster response than p-n junction diodes and a lower voltage drop.

Following turning off of the transistor Q1 the recirculation transistor Q4 can be maintained on for a time period sufficient to allow decay of the current in the associated phase winding, as shown in the drawing.

Subsequently the driving circuit 10 cyclically repeats the driving sequence described above.

The behaviour of the other phases can be derived analogously, and is substantially equivalent but offset by 120 electrical degrees between each of these.

The control circuit according to the invention can be used for the control of a half-wave brushless motor with a different number of phases, and in which each phase is powered in the course of the half-wave of opposite polarity from that described, depending on the mounting and circuit arrangements adopted.

## Claims

1. A control circuit for a half-wave DC polyphase electric motor without commutator, comprising:
a plurality of electronic phase switches (Q1, Q2, Q3) each of which is connected in series to a winding (W1, W2, W3) or phase of the motor to selectively couple this winding (W1, W2, W3) to a DC supply voltage source (B);
driving circuit means (10) for providing enabling signals adapted to turn the said electronic phase switches (Q1, Q2, Q3) selectively and cyclically on according to predetermined manners; and
current recirculation means (D1, Q4; D2, Q5; D3, Q6) connected to the phases of the motor (W1, W2, W3) for carrying the transient current which circulates in each phase of the motor each time the associated electronic switch (Q1, Q2, Q3) is turned off, the said recirculation means comprising a recirculation diode (D1, D2, D3) associated with each phase and connected to the supply voltage source (B) via a respective electronic recirculation switch (Q4, Q5, Q6) selectively controllable in such a way as to allow a flow of current from each phase winding (W1, W2, W3) to the said source (B) during the course of each half-wave of the induced electromotive force in this winding, during which the associated electronic phase switch (Q1, Q2, Q3) is turned on;
each phase switch (Q1, Q2, Q3) being driven in such a way that it is turned off with a sufficient advance with respect to the instant the corresponding recirculation switch (Q4, Q5, Q6) is turned off, for the purpose of allowing the current in the associated phase winding (W1, W2, W3) to decay;
**characterised in that** the recirculation switches (Q4, Q5, Q6) are permanently turned on for a period lying within the said half-wave of the electromotive force.

2. A circuit according to Claim 1, **characterised in that** the electronic phase switches (Q1, Q2, Q3) are turned on via pulse width modulated enabling signals.

3. A circuit according to Claim 1 or claim 2, **characterised in that** the recirculation switches (Q4, Q5, Q6) are driven with a signal complementary to the driving signal for the phase switches (Q1, Q2, Q3) for a period lying within the said each half-wave of the electromotive force.

4. A circuit according to any preceding claim, **characterised in that** the electronic recirculation switches (Q4, Q5, Q6) are n-channel MOSFET transistors, and **in that** the said circuit comprises voltage booster means (12) interposed between the supply source (B) and the driving circuit means (10) and arranged to provide to the said driving means (10) a supply voltage (Vₛ) greater than the voltage (V_{b}) generated by the said supply source and adapted to turn the said recirculation switches (Q4, Q5, Q6) on.

5. A circuit according to any of Claims 1 to 3, **characterised in that** the electronic recirculation switches (Q4, Q5, Q6) are p-channel MOSFET transistors.

6. A circuit according to any preceding claim, **characterised in that** the electronic phase switches (Q1, Q2, Q3) are n-channel MOSFET transistors.

7. A circuit according to any preceding claim, **characterised in that** the recirculation diodes (D1, D2, D3) are semiconductor Schottky diodes.

8. A circuit according to any preceding claim, **characterised in that** it includes a filtering capacitor (C) arranged substantially in parallel with the supply voltage source (B) to filter the harmonic voltage components which are generated across the terminals of the said source (B) in operation of the circuit.

9. A circuit according to Claim 8, **characterised in that** it comprises filtering means (L_{F1}, L_{F2}, C_{F}) of LC type to provide a further filtering of the harmonic components.

## Patentansprüche

1. Steuerschaltung für einen kommutatorlosen Halbwellen-Gleichstrom-Mehrphasenelektromotor, der aufweist:
eine Vielzahl an elektronischen Phasenumschaltem (Q1, Q2, Q3), von denen jeder in Reihenschaltung mit einer Wicklung (W1, W2, W3) oder Phase des Motors verbunden ist, um die Wicklung (W1, W2, W2) selektiv an eine Gleichstrom-Spannungsversorgungsquelle (B) anzuschließen;
Ansteuerschaltungsmittel (10) zum Bereitstellen von Aktivierungssignalen, die angepasst sind, um die elektronischen Phasenumschalter (Q1, Q2, Q3) gemäß bestimmter Art und Weisen selektiv und zyklisch anzuschalten; und
an die Phasen des Motors (W1, W2, W3) angeschlossene Stromrezirkulationsmittel (D1, Q4; D2, Q5; D3, Q6) zum Übertragen des transienten Stroms, der in jeder Phase des Motors bei jedem Ausschalten des zugehörigen elektronischen Schalters (Q1, Q2, Q3) fließt, wobei das Rezirkulationsmittel eine mit jeder Phase assoziierte Rezirkulationsdiode (D1, D2, D3) aufweist und mit der
Spannungsversorgungsquelle (B) über einen zugehörigen elektronischen Rezirkulationsschalter (Q4, Q5, Q6) verbunden ist, der dergestalt selektiv steuerbar ist, dass ein Fluss des Stromes aus jeder Phasenwicklung (W1, W2, W3) an die Quelle (B) während einer jeden Halbwelle der induzierten elektromotorischen Kraft in dieser Wicklung zugelassen wird, während der der zugehörige elektronische Phasenumschalter (Q1, Q2, Q3) angeschaltet ist;
wobei jeder Phasenumschalter (Q1, Q2, Q3) dergestalt angesteuert wird, dass er mit einem ausreichenden Vorlauf in Bezug zu dem Moment ausgeschaltet wird, in dem der entsprechende Rezirkulationsschalter (Q4, Q5, Q6) ausgeschaltet wird, damit der Strom in der zugehörigen Phasenwicklung (W1, W2, W3) abklingen kann;
**dadurch gekennzeichnet, dass**
die Rezirkulationsschalter (Q4, Q5, Q6) dauerhaft für einen Zeitraum angeschaltet sind, der innerhalb einer jeden Halbwelle der elektromotorischen Kraft liegt.

2. Steuerschaltung gemäß Anspruch 1,
**dadurch gekennzeichnet, dass** die elektronischen Phasenumschalter (Q1, Q2, Q3) über pulsbreitenmodulierte Aktivierungssignale eingeschaltet werden.

3. Steuerschaltung gemäß Anspruch 1 oder 2,
**dadurch gekennzeichnet, dass**
die Rezirkulationsschalter (Q4, Q5, Q6) mit einem Signal angesteuert werden, das komplementär zum Ansteuersignal für die Phasenumschalter (Q1, Q2, Q3) für einen Zeitraum ist, der innerhalb einer jeden Halbwelle der elektromotorischen Kraft liegt.

4. Steuerschaltung gemäß einem der vorhergehenden Ansprüche,
**dadurch gekennzeichnet, dass**
die elektronischen Rezirkulationsschalter (Q4, Q5, Q6) N-Kanal-MOSFET-Transistoren sind, und darin, dass die Schaltung Spannungsverstärkermittel (12) aufweist, die zwischen einer Versorgungsquelle (B) und dem Ansteuerschaltungsmittel (10) positioniert sind und angeordnet sind, um für die Ansteuermittel (10) eine Versorgungsspannung (Vₛ) größer als die von der Versorgungsquelle generierte Spannung (V_{b}) bereitzustellen und angepasst, um die Rezirkulationsschalter (Q4, Q5, Q6) anzuschalten.

5. Steuerschaltung gemäß einem der Ansprüche 1 bis 3,
**dadurch gekennzeichnet, dass** die elektronischen Rezirkulationsschalter (Q4, Q5, Q6) P-Kanal-MOSFET-Transistoren sind.

6. Steuerschaltung gemäß einem der vorhergehenden Ansprüche,
**dadurch gekennzeichnet, dass** die elektronischen Phasenumschalter (Q1, Q2, Q3) N-Kanal-MOSFET-Transistoren sind.

7. Steuerschaltung gemäß einem der vorhergehenden Ansprüche,
**dadurch gekennzeichnet, dass** die Rezirkulationsdioden (D1, D2, D3) Schottky-Halbleiterdioden sind.

8. Steuerschaltung gemäß einem der vorhergehenden Ansprüche,
**dadurch gekennzeichnet, dass** sie einen Filterkondensator (C) enthält, der im Wesentlichen parallel zur Versorgungsspannungsquelle (B) angeordnet ist, um die harmonischen Spannungskomponenten zu filtern, die über die Anschlüsse der Quelle (B) bei Betrieb der Steuerschaltung generiert werden.

9. Steuerschaltung gemäß Anspruch 8,
**dadurch gekennzeichnet, dass** sie Filtermittel (L_{Fi}, L_{F2}, C_{F}) vom LC-Typ enthält, um eine weitere Filterung der harmonischen Komponenten vorzusehen.

## Revendications

1. Circuit de régulation pour un moteur électrique polyphasé à courant continu à demi-onde sans collecteur, comprenant :
une pluralité d'inverseurs de phase électroniques (Q1, Q2, Q3), chacun étant connecté en série à un enroulement (W1, W2, W3) ou une phase du moteur pour coupler sélectivement cet enroulement (W1, W2, W3) à une source de tension d'alimentation en courant continu (B) ;
des moyens formant circuit de commande (10) destinés à fournir des signaux d'autorisation conçus pour mettre de façon sélective et cyclique lesdits inverseurs de phase électroniques (Q1, Q2, Q3) en position marche selon des manières prédéterminées ; et
des moyens de recirculation de courant (D1, Q4 ; D2, Q5 ; D3, Q6) connectés aux phases du moteur (W1, W2, W3) pour porter le courant transitoire qui circule dans chaque phase du moteur chaque fois que l'inverseur électronique associé (Q1, Q2, Q3) est mis en position arrêt, lesdits moyens de recirculation comprenant une diode de recirculation (D1, D2, D3) associée à chaque phase et connectée à la source de tension d'alimentation (B) via un inverseur de recirculation électronique respectif (Q4, Q5, Q6) contrôlable sélectivement de telle manière à permettre une circulation du courant de chaque enroulement de phase (W1, W2, W3) vers ladite source (B) au cours du trajet de chaque demi-onde de la force électromotrice induite dans cet enroulement, au cours duquel l'inverseur de phase électronique associé (Q1, Q2, Q3) est mis en position marche ;
chaque inverseur de phase (Q1, Q2, Q3) étant commandé de telle manière à être mis en position arrêt avec une avance suffisante par rapport à l'instant où l'inverseur de recirculation correspondant (Q4, Q5, Q6) est mis en position arrêt, dans le but de permettre au courant dans l'enroulement de phase associé (W1, W2, W3) de décliner ;
**caractérisé en ce que** les inverseurs de recirculation (Q4, Q5, Q6) sont mis en position marche de façon permanente pour une période se trouvant à l'intérieur de chaque demi-onde de la force électromotrice.

2. Circuit selon la revendication 1, **caractérisé en ce que** les inverseurs de phase électroniques (Q1, Q2, Q3) sont mis en position marche par le biais de signaux d'autorisation modulés par impulsions de durée variable.

3. Circuit selon la revendication 1 ou la revendication 2, **caractérisé en ce que** les inverseurs de recirculation (Q4, Q5, Q6) sont commandés avec un signal complémentaire du signal de commande pour les inverseurs de phase (Q1, Q2, Q3) pour une période se trouvant à l'intérieur de chacune desdites demi-ondes de la force électromotrice.

4. Circuit selon l'une quelconque des revendications précédentes, **caractérisé en ce que** les inverseurs de recirculation électroniques (Q4, Q5, Q6) sont des transistors MOSFET à canal n, et **en ce que** ledit circuit comprend des moyens formant survolteur (12) intercalés entre la source d'alimentation (B) et les moyens formant circuit de commande (10) et conçus pour fournir auxdits moyens de commande (10) une tension d'alimentation (Vₛ) supérieure à la tension (V_{b}) générée par ladite source d'alimentation et adaptée pour mettre lesdits inverseurs de recirculation (Q4, Q5, Q6) en position marche.

5. Circuit selon l'une quelconque des revendications 1 à 3, **caractérisé en ce que** les inverseurs de recirculation électroniques (Q4, Q5, Q6) sont des transistors MOSFET à canal p.

6. Circuit selon l'une quelconque des revendications précédentes, **caractérisé en ce que** les inverseurs de phase électroniques (Q1, Q2, Q3) sont des transistors MOSFET à canal n.

7. Circuit selon l'une quelconque des revendications précédentes, **caractérisé en ce que** les diodes de recirculation (D1, D2, D3) sont des diodes Schottky à semi-conducteur.

8. Circuit selon l'une quelconque des revendications précédentes, **caractérisé en ce qu'**il comprend un condensateur de filtrage (C) agencé sensiblement en parallèle avec la source de tension d'alimentation (B) pour filtrer les composantes de tension harmoniques qui sont générées au travers des bornes de ladite source (B) au cours du fonctionnement du circuit.

9. Circuit selon la revendication 8, **caractérisé en ce qu'**il comprend des moyens de filtrage (L_{F1}, L_{F2}, C_{F}) de type LC pour permettre un plus grand filtrage des composantes harmoniques.
